Europäisches Patentamt

European Patent Office

Office européen des brevets

(11) Veröffentlichungsnummer: **0 384 295**
**A2**

## EUROPÄISCHE PATENTANMELDUNG

(21) Anmeldenummer: 90102952.0

(22) Anmeldetag: 15.02.90

(51) Int. Cl.5: **B01D 53/36, F23G 7/06, F23C 6/04**

(30) Priorität: 24.02.89 DE 3905775

(43) Veröffentlichungstag der Anmeldung:
29.08.90 Patentblatt 90/35

(84) Benannte Vertragsstaaten:
AT BE CH DE FR GB IT LI LU NL SE

(71) Anmelder: KAT- TEC GESELLSCHAFT FÜR KATALYSATORTECHNIK MBH
Augsburger Strasse 712
D-7000 Stuttgart 61(DE)

(72) Erfinder: Koch, Christian, Dr.-Ing.
Schulstrasse 8
D-8602 Buttenheim(DE)

(54) **Verfahren und Vorrichtung zur Reduzierung von Schadstoffen eines Verbrennungsverfahrens mit Oxidations-Wabenkatalysatoren und Katalysatoren mit Entschwefelungseigenschaften und Abgasrückführung.**

(57) Die Erfindung beschreibt ein Verfahren und eine Vorrichtung, bestehend aus ein oder mehereren Katalysatorlagen nach dem Flammraum vor den Berührungsheizflächen von Wärmeerzeugern und einer Abgasrückführung von Abgas nach dem Wärmeerzeuger. Durch die Erfindung ist es möglich, die Abgase von Wärmeerzeugern, die auf der Basis der Verbrennung der fossilen Rohstoffe wie Kohle, Öl oder Gas arbeiten, nachzuverbrennen und damit die unverbrannten oder teilverbrannten Gasbestandteile noch in Wärme und unschädliche Gase umzuwandeln. Dabei werden gleichzeitig die Schadstoffkomponenten NOx und SO2 als Sauerstofflieferanten für die Verbrennung verwendet und damit diese Schadgase ebenfalls in die unschädlichen Komponenten Stickstoff und elementaren Schwefel umgewandelt.

EP 0 384 295 A2

## Verfahren und Vorrichtung zur Reduzierung von Schadstoffen eines Verbrennungsverfahrens mit Oxidations-Wabenkatalysatoren und Katalysatoren mit Entschwefelungseigenschaften und Abgasrückführung

Die Erfindung betrifft ein Verfahren und eine Vorrichtung, die zu einer Reduzierung der wichtigsten Schadstoffe wie NOx, SO2 und der teil- und unverbrannten Brennstoffe, wie z.B CO, die in einem Verbrennungsverfahren bei der Verbrennung fossiler Brennstoffe entstehen, führt.

Die Reduzierung der Luftschadstoffe aus den Verbrennungsgasen, die maßgeblich am Waldsterben beteiligt sind, ist das Ziel der Zusatzeinrichtungen an Verbrennungsanlagen der Wärmeerzeuger. Dabei werden die Schadstoffe üblicherweise über Zusatzeinrichtungen, wie heiße Brennkammer für die unverbrannten und teilverbrannten Rauchgaskomponenten, Entschwefelungsanlagen für Schwefeloxide und Entstickungsanlagen für die Stickoxide, entfernt. Alle diese Anlagen reduzieren durch Zugabe von Reduktionsmitteln vorwiegend nur einen Schadstoff, führen jedoch fast immer zur Erhöhung der Konzentration von anderen Schadstoffen, wie z.B dem Anfall von Gipsgemischen bei der Entschwefelung, oder dem Ammoniakschlupf bei den Entstickungsanlagen oder der Erhöhung der Stickoxide bei der heißen Brennkammer.

Ziel der Erfindung ist es, die Schadstoffe gemeinsam zu reduzieren, ohne dabei andere Schadstoffkomponenten gleichzeitig zu erhöhen. Es wurde nun gefunden, daß das wesentliche Element einer solchen Vorrichtung bzw. eines solchen Verfahrens ein Katalysator ist, der unmittelbar nach dem Flammenraum, bzw. Strahlraum, jedoch vor den Berührungsheizflächen angeordnet ist. Ein solcher Katalysator wurde in einer mit lanthanhaltigen Spinellen beschichteten Keramikwabe gefunden. Auf der Basis dieser Spinelle konnte in dem Katalysator eine weitere Verbrennungsstufe realisiert werden, die es ermöglicht, die Flamme durch Abgasrückführung oder Luftmangelverbrennung fast stickoxidfrei zu betreiben und die dabei entstehenden brennbaren Gaskomponenten in der Wabenkeramik sowohl nachzuverbrennen als auch als Reduktionsmittel für die Schwefel- und Stickoxidgase zu verwenden, d. h. die vor dem Katalysator vorhandenen unverbrannten Komponenten, wie CO, ermöglichen die Reduzierung der Gase SO2 zu S und NOx zu N2 am Katalysator.

Die Realisierung einer weiteren Verbrennung in dem Katalysator mit dem durch Reduktion von NOx und SO2 freiwerdenden Sauerstoff bzw. dem Restsauerstoffgehalt der Rauchgase in einem Wabenkatalysatorkörper bringt jedoch nur dann eine deutliche Senkung der Schadstoffe, wenn eine Vielzahl von überraschend gefundenen Details beachtet werden. Diese sind erfindungswesentlich, da bei ihrer Nichtbeachtung der schadstoffmindernde Einfluß der Verbrennungskatalysatoren nicht nur verloren geht, sondern sich sogar schadstoffsteigernd auswirken kann.

Diese Schadstoffsteigerung beruht vor allem auf der Umwandlung von NO zu NO2, die als Erhöhung des Stickoxidgehaltes gemessen wird.

Wesentlich für die Realisierung eines niedrigen Schadstoffgehaltes in der Kombination von Nachverbrennungsspinellwabenkatalysator vor den Berührungsheizflächen einer Wärmeerzeugungseinrichtungen und der Realisierung einer kalten Flamme durch Abgasrückführung ist die Anzapfung des Rauchgases an einer möglichst kalten Stelle, vorzugsweise am Ende des Wärmetauschersystems des Wärmeerzeugers, d. h. nach dem Kessel. Das für die Abgasrückführung abgezapfte Rauchgas kann durch kaltes Speise- bzw. Brauchwasser, wie es in den Rückführungsleitungen zum Kessel vorliegt, noch zusätzlich abgekühlt werden. Die Rauchgasrückführungsmenge muß zwischen 10 und 30 % der angesaugten Luftmenge liegen. Für die Sicherung der Flammenüberwachung sind bei der so erzeugten Flamme empfindliche Fotozellen bzw. Flammendetektoren erforderlich, die die dann realisierte blau-rosa Flamme noch als Flamme detektieren können. Bei einer Luftmangelverbrennung ist vor dem Katalysator bzw. bei einem zwei oder mehrlagigen Katalysatorsystem eine Sekundärluftzuführung vor der ersten Lage oder zwischen den ersten Lagen notwendig, um den notwendigen Verbrennungsluftstrom zur vollständigen Verbrennung im Katalysator sicherzustellen. Das Katalysatorsystem besteht aus einer oder mehreren Lagen, vorzugsweise aus 2 Lagen mit einer Tiefe zwischen 40 und 400 mm. Das Temperaturniveau muß bei allen Betriebszuständen zwischen 500 und 1000 grdC liegen.

Die Wabenkatalysatoren nehmen in dieser Lage nicht nur die relativ hohe Temperatur an, sondern sie geben die aufgenommene Wärme auch in zweierlei Weise wieder ab. Die erste Art der Wärmeabgabe ist gegeben durch die Wärmeleitung in der Wabenkeramik zur Wand. Diese Wärmeabgabe wird dadurch unterstützt, daß die Wabe nicht in einem Keramikfilz, sondern in einem Metallstrickgewebe gehalten wird, die nicht nur die Dehnung besser aufnimmt, sondern auch die Wärmeableitung zur Wand nicht behindert. Die zweite Art der Wärmeabgabe ist gegeben durch die hohe Strahlungswärme der Wabe an den davor liegenden Raum zur Stabilisierung der Verbrennung und an den nachliegenden Raum durch Festkörperstrahlung an die Berührungsheizflächen. Festkörper strahlen bei gleicher Temperatur mehr Wärme ab als Gase. Dadurch wird die spez. Wärmeaufnahme der nach dem Katalysator liegenden Berührungsheizflächen größer, was bei gleicher Wärmeleistung zu kleineren Baueinheiten führt. Durch die vollständige Verbrennung im Katalysator nimmt die Verschmutzung der nach dem Katalysator liegenden Heizflächen stark ab, was zu einer weiteren Verkleinerung der Heizflächen führt. Wärmetechnisch ermöglicht die Wärmeabstrahlung des Katalysators in den davorliegenden Flammraum hinein eine hohe Abgasrückführungsquote, da dadurch die Flamme stabilisiert und Pulsation im Flammraum verringert wird.

Auch strömungstechnisch gehen vom Wabenkatalysator günstige Wirkungen aus, da das Rauchgas über den Wabenkatalysator gezwungen wird, gleichmäßig durch die Heizflächen zu strömen. Somit werden Fahnenbildungen bzw. Schräglagen unterdrückt.

Bedingt durch das hohe Temperaturniveau, in dem die Katalysatoren ihren Einsatzbereich finden, ist es erforderlich, sie gegen Beschichtungsveränderungen zu sichern. Dieses gelingt nur dadurch, daß für die Herstellung der Katalysatoren ausschließlich gebrannte Wabenkeramiken aus Materialien, wie Cordierit oder Mullit, also Materialien mit geringer Dehnung verwendet werden, die eine hohe Temperaturwechselbeständigkeit aufweisen. Zulässig sind auch Tone und Porzellane als Grundkörper, wenn die Temperaturwechselbeständigkeit erreicht wird. Hierzu sollte die Dehnung unter 4,5 x E-6 je Gradk sein. Es wurde nun gefunden, daß sich für die Beschichtung der Wabenkörper durch Tränkung zwei Suspensionsformen aus lanthanhaltigen Materialien besonders gut eignen. Die erste Form ist die Tränkung in einer Suspension von Spinellen, die in einem ameisensäurehaltigen Gemisch unter Verwendung von suspensionsbildenden, organischen Stoffen, wie Tensiden in Schwebe gehalten werden. Die zweite Form ist eine Suspension aus lanthanhaltigen Spinellen in ameisensäurehaltigem Gemisch mit gleichzeitiger Aufschlämmung von Wash-Coat-Komponenten TiO2 und Al2O3 in dispergierter Form. Die Dispersion des Wash-Coates wird durch die Auflösung des Kristallverbandes der Stoffe in dem Ameisensäure-Wasser-Gemisch erreicht, insbesondere des Aluminiumoxides in Form eines speziellen Böhmits, der aus metallischem Aluminium hergestellt wird. Zusammen mit TiO2 mit speziell großer Oberfläche ergibt sich aus diesen Stoffen der Wash-Coat-Grundstoff.

Die organischen Säuren in dem Tränkgemisch ermöglichen die Umkristalisation der lanthanhaltigen Spinelle zu katalytisch aktiven Stoffen, die nadel- und igelförmig auf der Wabenkeramikoberfläche und in den Poren der Wabenkeramik aufgebaut sind. Als Spinelle sind hier die Verbindungen von Lanthanoxid und Kobalt- oder Manganoxiden anzusehen. Wichtig dabei ist, daß mit Überschüssen gegenüber dem stöchiometrischen Spinell von Lanthanoxid gearbeitet wird. Außer einem Überschuß an Lanthanoxid kann auch Ceroxid verwendet werden, wenn es sich um die Verbindung mit KoBaltoxid handelt oder Vanadium- bzw. Thoriumoxid, wenn es sich um die Verbindung mit Manganoxid handelt. Hergestellt werden die Spinelle durch die Auflösung der Nitrate und anschließendem Erhitzen der Stoffe auf 300 bis 1100 grdC. Dabei werden zuerst die Hauptkomponenten Lathan- und Kobalt- bzw. Mangannitrat gemischt und erhitzt und dann die anderen Stoffe als Überschuß der seltenen Erden mit 2 bis 30 % als gelöste Nitrate zugemischt. Danach wird das Gemisch zur Erzeugung des Spinellpulvers mit Korngrenzstabilisatoren, die verhindern, daß die Aktivität des Spinells in seiner Betriebszeit von 1 bis 5 Jahren abnimmt, erneut auf 300 grdC bis 1100 grdC erhitzt.

Als Korngrenzenstabilisatoren werden dabei die Überschüsse an Lanthan-, Cer-, Vanadium- und Thoriumsalzen bezeichnet. Anschließend werden die so erzeugten gemahlenen Spinellrohstoffe in Salpeter- oder Alkansäuren eingerührt, die Wash-Coat-Substanzen TiO2 und Al2O3 zugegeben und der Wabenkörper in diese Suspension getaucht. Nach dem Beschichten des Wabenkörpers wird dieser getrocknet und ebenfalls wieder bei 300 bis 1100 grdC gebrannt.

Durch die beschriebene Anordnung der Komponenten einer Wärmeerzeugungseinrichtung mit Katalysator und Rauchgasrückführung und die Gestaltung des Verbrennungsverfahrens mit Nachverbrennung im Wabenkatalysator wird erreicht, daß für die katalytische Nachoxidation immer ein ausreichender aufzuoxidierender Gasanteil im Rauchgas enthalten ist. Die Nachoxidation erfolgt dann in der Weise, daß nicht nur restlicher Sauerstoff für die Nachverbrennung am Katalysator eingesetzt wird, sondern unter anderem auch der Sauerstoff der Schwefeloxide, die am Katalysator zu elementarem Schwefel reduziert werden, und der Stickoxide, die zu Stickstoff reduziert werden. Dadurch ist der Katalysator auch aktiv in der Verminderung der Konzentration der Schwefeloxide im Rauchgas durch Bildung von elementarem Schwefel, der nadelförmig im Kessel anfällt und der Stickoxide, die keinen festen Rückstand hinterlassen.

Bei entsprechender Gestaltung des Zusammenwirkens der beschriebenen Komponenten einer Wärmeerzeugungseinrichtung mit Verbrennung fossiler, auch schlackehaltiger Brennstoffe wird bewirkt, daß einerseits eine kompakte Anlage gebaut werden kann, andererseits ist das abgegebene Rauchgas sehr saüber. Dieses wird möglich durch den Einbau eines Katalysators für eine selektive Nachverbrennung, d. h. Schwefel- und Stickoxide werden reduziert und der freiwerdende Sauerstoff wird zur Nachverbrennung der unverbrannten oder nur teilweise verbrannten Kohlenwasserstoffe eingesetzt. Diese Nachverbrennung wird kombiniert mit einer Rauchgasrückführung zur Absenkung der Stickoxide, die nur durch das katalytisch gereinigte Rauchgas ermöglicht wird. Die kompaktere Bauweise wird erreicht durch die geringere Verschmutzung, d. h. eine vollständige Verbrennung, wobei kein Ruß entsteht, und die Abstrahlungseigenschaften des Katalysators auf die ihn umgebenden Heizflächen.

Das erfindungsgemäße Verfahren und die erfindungsgemäße Vorrichtung wird in Fig.:1 für einen kohle-, in Fig.:2 für einen gas-oder ölbetriebenen Dampferzeuger und in Fig.:3 für einen Heizkessel mit heißer Brennkammer und in Fig.:4 für eine Gastherme zur Erzeugung von Warmwasser gezeigt.

In Fig.:1 verbrennt Kohle oder Heizöl (S) im Flammraum (1) des Dampferzeugers (2). Die Flamme der Kohleverbrennung wird durch die Rauchgasrückführung (3) gekühlt, so daß hier eine Reduzierung der Stickoxidbildung erfolgt.

Eine weiter Absenkung der Stickoxide wird erreicht, wenn das rückgeführte Rauchgas in einem Wärmetauscher (4) mit kaltem Speisewasser oder Brauchwasser (5) noch weiter abgekühlt wird. Am Ende des Strahlraumes (6) trifft das Rauchgas auf den Gleichrichter (7), wo die Turbulenz aus dem Rauchgas genommen und somit das nachfolgende Oxidations-Katalysatorsystem (8) vor vorzeitiger Abrassion geschützt wird. Nach den Oxidationskatalysatoren (8), in denen auch die Nachverbrennung stattfindet, durchströmt das nun rußfreie Rauchgas das Überhitzersystem (9). Abhängig von den Kesselbedingungen durchströmt das Rauchgas auch den Entschwefelungskatalysator (10) im Bereich der vorderen oder hinteren Berührungsheizflächen (11). Der Flugstaub und die Schwefelpartikel werden in den Abscheidern (12) und (13) abgeschieden. Zwischen den Abscheidern (12) und (13) liegt das Saugzuggebläse (14). Durch den Rauchgaskanal (15) strömt das gereinigte Gas in den Kamin. Hinter dem letzten Abscheider (13) wird ein Teilstrom sauberes Rauchgas entnommen, in einem Wärmetauscher (4) nachgekühlt und vor dem Frischlüfter (16) in die Frischluftleitung eingebunden.

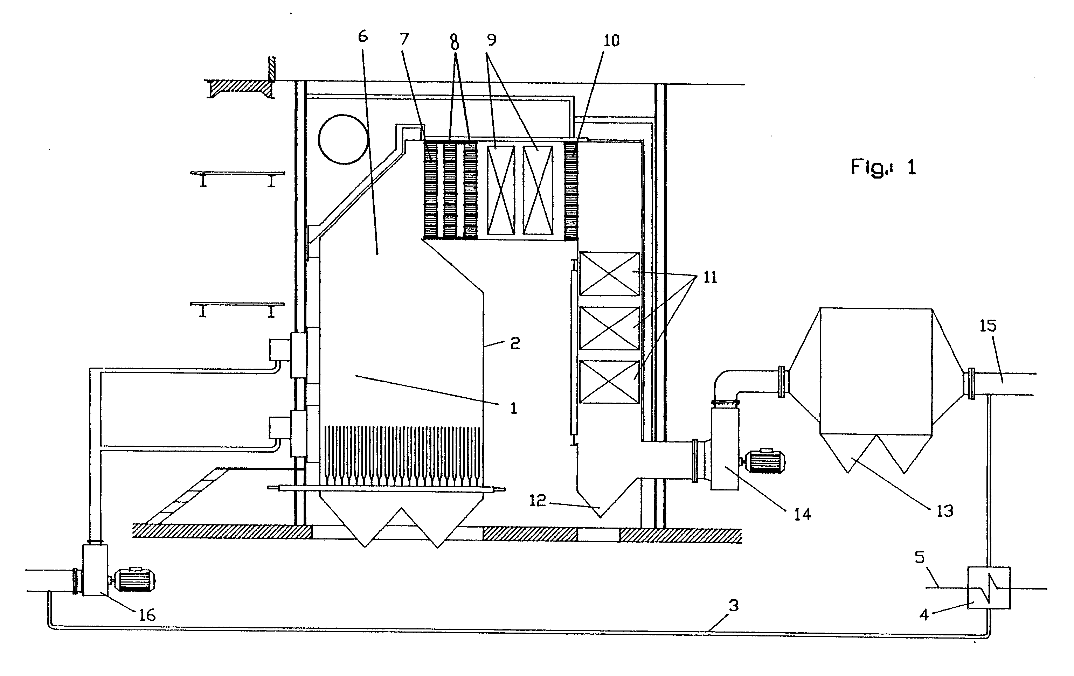

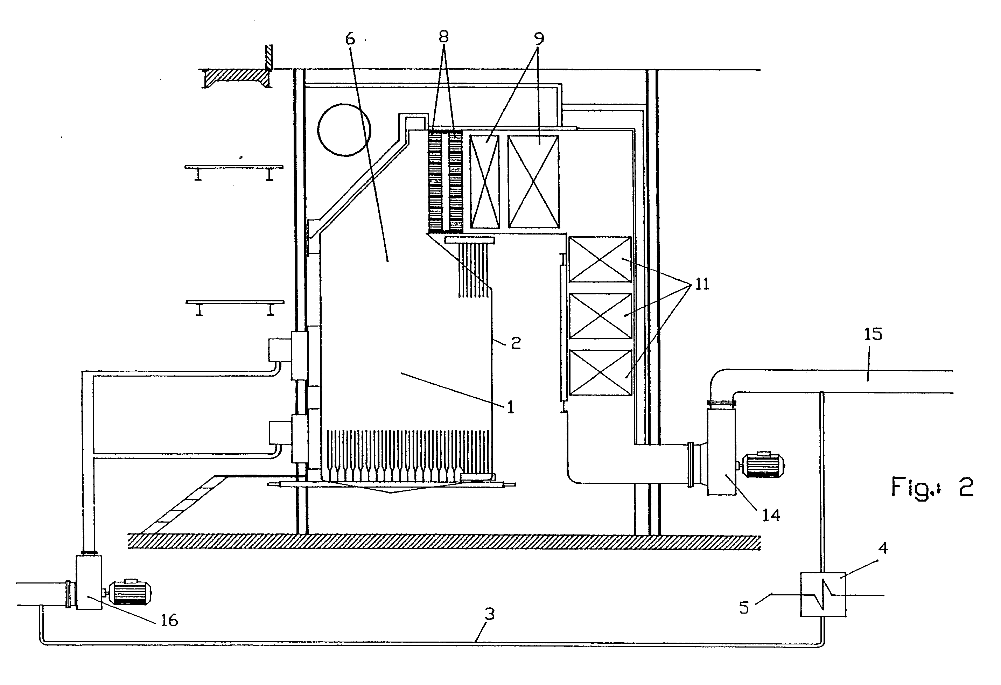

Fig.2 zeigt den gleichen Kessel für Gas- bzw. Heizöl-(EL)-Betrieb. In diesem Kessel befinden sich vor dem Oxidationskatalysatoren (8) keine Gleichrichter mehr, weil in diesen Brennstoffen die abrassiven Bestandteile fehlen. Desgleichen können die Entschwefelkatalysatoren aufgrund der geringen S-Bestandteile sowie die Abscheider weggelassen werden.

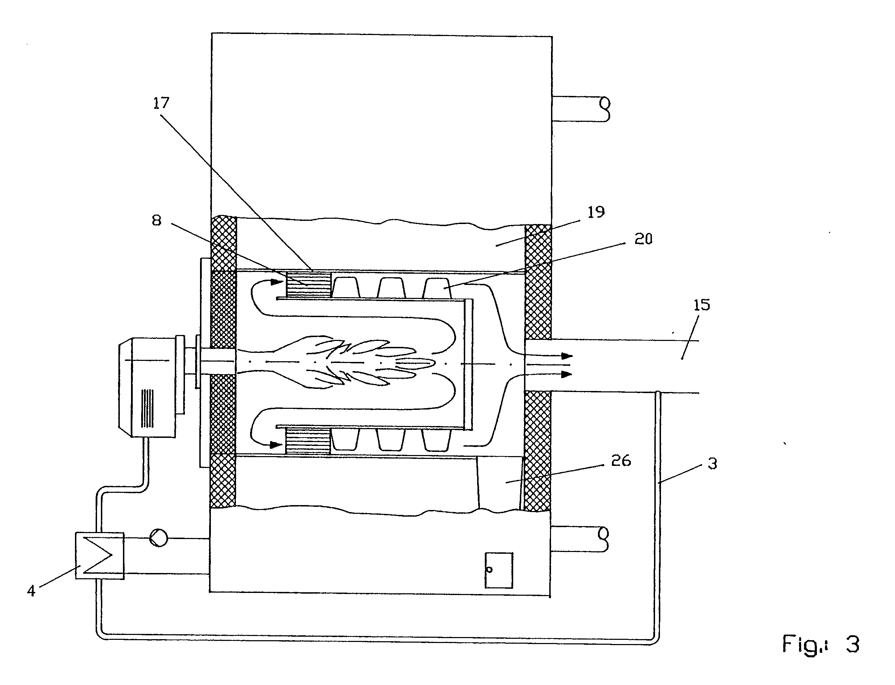

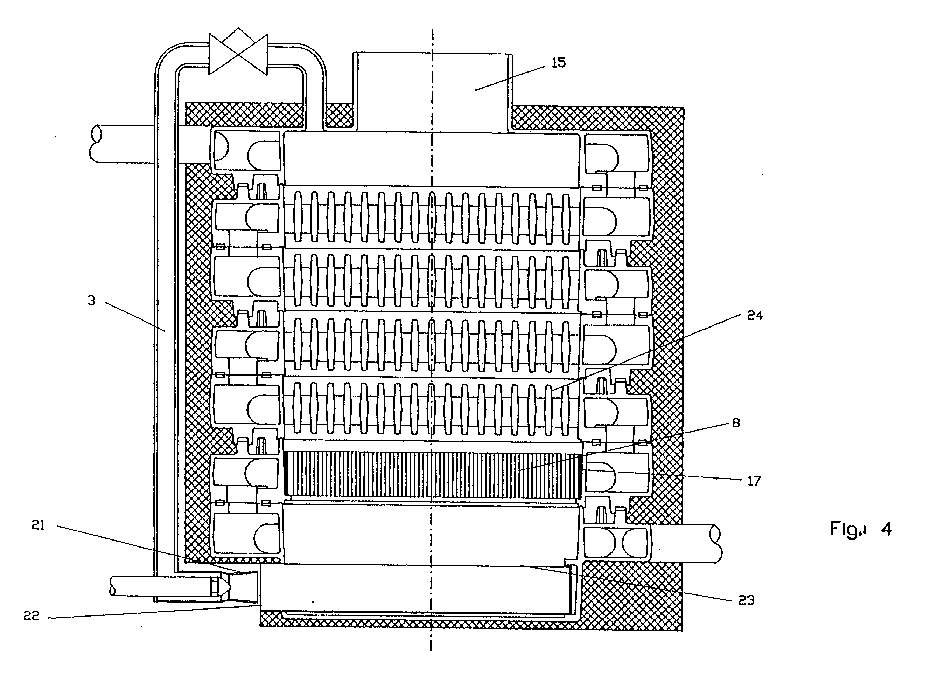

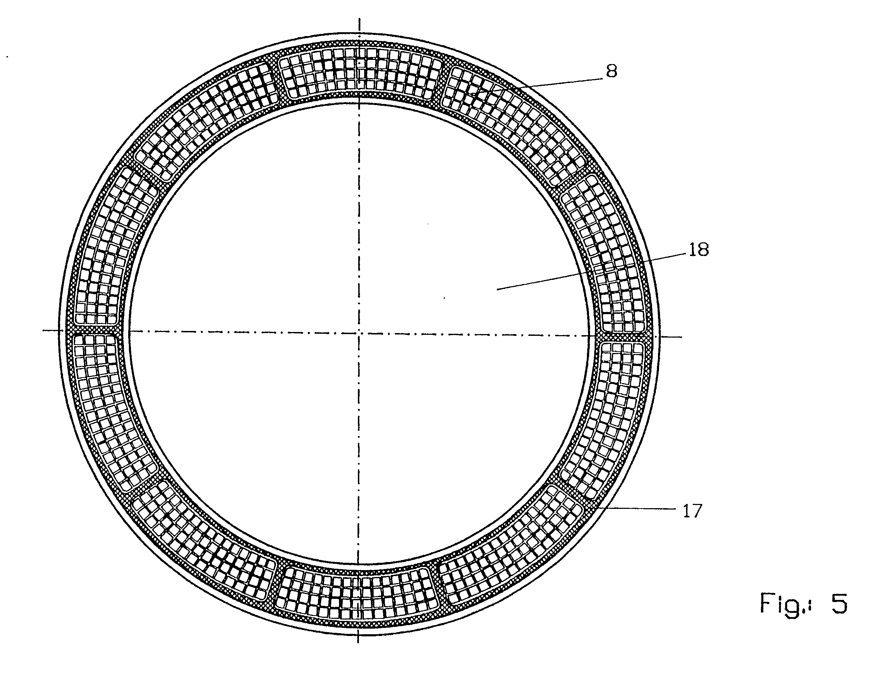

Fig.3 zeigt die Vorrichtung und das Verfahren bei einem Heizkessel mit Öl- oder Gasfeuerung und heißer Brennkammer zur Erzeugung von Warmwasser. Aus dem Rauchgaskanal (15) wird ein Teilstrom der Rauchgase in der Rauchgasrückführung (3) im Wärmetauscher (4) weiter abgekühlt und dann der Verbrennungsluft des Brenners zugegeben. Bei minimaler NOx-Bildung werden viele CO-Komponenten gebildet, die dann in den Oxidationskatalysatoren (8), die vor der direkten Flammeneinstrahlung geschützt liegen, vollständig nachverbrannt werden. Die Anordnung des Katalysatorsystems zeigt Fig.:5. Die Oxidationskatalysatoren (8) sind in einer temperaturbeständigen elastischen Halterung (17) eingebettet. Aus dem Brennraum (18) strömen die heißen Rauchgase durch die Oxidationskatalysatoren (8). Je nach Materialbeschaffenheit der elastischen Katalysatorhalterung (17) gibt der heiße Katalysator seine Strahlungswärme an den Wasserraum (19) oder die hinter dem Katalysator liegenden Wärmetauscher (20) ab (Fig.:3).

Fig.:4 zeigt die Vorrichtung und das Verfahren bei einer Gastherme. Ober die Rauchgasrückführung (3) wird das Brenngas über eine venturiförmige Ansaugung (21) mit Rauchgas vermischt. Durch die Verbrennungsluftschlitze (22) wird die Verbrennungsluft angesaugt und an den Brenndüsen (23) wird das Gemisch verbrannt. Die Rauchgase durchströmen den Oxidationskatalysator (8), wo die Nachoxidation erfolgt.

An den nachfolgenden Heizflächen der Gastherme (24) nachfolgenden kühlt sich das Rauchgas ab, bevor es durch den Rauchgaskanal (15) abgegeben, bzw. durch die Rauchgasrückführung (3) teilweise rückgeführt wird.

In einem speziellen Auführungsbeispiel werden die Besonderheiten des erfindungsgemäßen Verfahrens näher erläutert.

Ein Heizkessel mit einer thermischen Leistung von ca. 30 kW wird mit Heizöl betrieben. Die angesaugte Verbrennungsluft hat eine Temperatur von 20 grdC, die Temperatur des Rauchgases im Rauchgaskanal (15) beträgt 170 grdC. Das durch die Rauchgasrückführung (3) strömende Gas wird im Wärmetauscher (4) auf ca. 50 grdC abgekühlt. Die Luftzahl der Verbrennung betrug 1.17, das Rauchgasrückführungsverhältnis lag zwischen 15 und 30 %. Durch die hohe Abgasrückführungsrate nahm die Flamme eine schwach bläulich-rosa Färbung an. Im Brennraum wurde ein CO-Gehalt zwischen 100 ppm und 200 ppm gemessen, nach dem Oxidationskatalysator (8) betrug der Wert 2 bis 10 ppm, bezogen auf 3% $O_2$ lagen die CO-Werte nach dem Oxidationskatalysator (8) zwischen 2 mg/m3 und 11 mg/m$^3$. Die NOx-Werte

lagen sowohl vor als auch nach dem Oxidationskatalysator (8) zwischen 20 ppm und 40 ppm, bezogen auf 3% O2 betrugen die NO2-Werte zwischen 40 mg/m3 und 80 mg/m3. Die SO2-Werte lagen vor dem Oxidationskatalysator (8) bei 240 mg/m3 (bezogen auf 3% O2), nach dem Katalysator zwischen 30 und 60 ppm, oder zwischen 80 mg/m3 und 160 mg/m3 (bezogen auf 3% O2). Die Ausscheidungen des Schwefels zeigten sich nadelförmig am Katalysatorende, dort platzten sie ab und wurden vom Rauchgasstrom zum Abscheidetrichter (26) transportiert. Einmal wöchentlich wurde der ausgeschiedene Schwefel durch die Reinigungsöffnung (27) entfernt.

Ein weiters Ausführungsbeispiel soll die erfindungsgemäße Vorrichtung näher erläutern.

Ein Heizkessel ist mit einer heißen Brennkammer, die einen Durchmesser von ca. 260 mm und eine Tiefe von ca. 290 mm hat, ausgerustet. Der äußere Durchmesser der Brennkammer beträgt ca. 350 mm. Im Zwischenraum zwischen dem inneren und äußeren Durchmesser sind die Oxidationskatalysatoren (8) eingepaßt, siehe Fig.:5. Das Katalysatorensystem besteht aus einer Lage mit einer Tiefe von ca. 60 mm und 10 gebogenen Katalysatorsekmenten mit einem äußeren Radius von ca. 170 mm und einen inneren Radius von ca. 140 mm. Die Katalysatoren haben ein durchschnittliches Pitchmaß von 5.6 mm und eine mittlere Stegdicke von ca. 0.6 mm. Nach den Katalysatoren liegt der Heizkessel-Wärmetauscher (20). Die Rippen dieses Wärmetauschers haben eine Länge von ca. 220 mm. Die Abgasrückführung (3) bestand aus einem Wellblechschlauch mit einem inneren Durchmesser von ca. 30 mm, seine Länge betrug ca. 50 cm.

Zwei weitere Ausführungsbeispiele sollen das erfindungsgemäße Verfahren bei der Herstellung des Katalysators mit und ohne wash-coat näher beschreiben.

Für die Herstellung der Katalysatorsubstanz ohne wash-coat werden die Ausgangsspinelle aus lanthanhaltigen Materialien ca. 2 Stunden gemahlen, bis sie staubfein sind und anschließend in Ameisensäure zu einem Schlicker eingerührt. Die Säure reagiert exotherm mit Anteilen der Spinelle, was zu einer Temperaturerhöhung des Schlickers von 20 bis 30 grdC führt. Nach seiner Abkühlung werden 5 bis 30 Vol-% ionische Tenside zugesetzt. Die keramischen Wabenkörper werden in die Suspension bis zu ca. 3 Minuten hineingetaucht, dann bei 120 bis 200 grdC ca. 30 min getrocknet, um dann anschließend bei 400 bis 1100 grdC nachgebrannt zu werden.

Bei der Herstellung von Katalysatorsubstanz mit wash-coat werden die Ausgangsspinelle mit TiO2 gemischt und dann ebenfalls staubfein gemahlen. Nach dem Mahlvorgang, der über mehrere Stunden gehen kann, wird das Pulver mit Ameisensäure angesetzt. Parallel dazu wird Al2O3 mit Wasser angesetzt und der Spinellsuspension zugegeben und gleichmäßig eingerührt. Danach erfolgt die Tränkung der Wabenkörper mit der anschließenden Trocknung und dem Brennen bei Temperaturen zwischen 400 und 1100 grdC.

Nomenklatur für Patent:
Verfahren und Vorrichtung zur Reduzierung von Schadstoffen eines Verbrennungsverfahrens mit Oxidations- und Entschwefelungs-Wabenkatalysatoren nach dem Flammraum und Abgasrückführung.

1. Flammraum
2. Dampferzeuger
3. Rauchgasrückführung
4. Wärmetauscher
5. Speise- oder Brauchwasser
6. Strahlraum
7. Gleichrichter
8. Oxidationskatalysatoren
9. Überhitzersystem
10. Entschwefelungskatalysator
11. hintere Berührungsheizflächen
12. Abscheider
13. Abscheider
14. Saugzuggebläse
15. Rauchgaskanal
16. Frischlüfter
17. elastische Katalysatorhalterung
18. Brennraum
19. Wasserraum
20. Heizkessel-Wärmetauscher
21. venturiförmige Ansaugung
22. Verbrennungsluftschlitze
23. Brenndüsen
24. Heizflächen Gas-Therme
25.
26. Abscheidetrichter für elementaren Schwefel
27. Reinigungsöffnung für ausgeschiedenen Schwefel

## Ansprüche

1. Verfahren zur Reduzierung der Schadstoffe aus dem Rauchgas eines Verbrennungsverfahrens, dadurch gekennzeichnet, daß die Verbrennung durch Flammenkühlung mit herabgesetzter Verbrennungstemperatur durchgeführt wird und ein oder mehrere Wabenkatalysatoren vor und hinter den ersten Berührungsheizflächen im Rauchgasstrom eingeschaltet sind.

2. Verfahren nach Anspruch 1 , dadurch gekennzeichnet, daß die Nachverbrennung der unverbrannten Kohlenwasserstoffe in einem mit lanthanhaltigen Spinellen, die in organischen Säuren suspendiert wurden, beschichteten Wabenkatalysator erfolgt.

3. Verfahren nach Anspruch 1 dadurch gekennzeichnet, daß die Reduzierung der Schwefelkomponenten im Abgas in einem lanthanhaltigen Spinellkatalysator erfolgt.

4. Verfahren nach Anspruch 1, 2 und 3 dadurch gekennzeichnet, daß die Reduzierung der Stickoxide durch rückgeführtes Abgas erfolgt, das vorher durch einen oder mehrere Spinellkatalysatoren gereinigt wurde.

5. Verfahren nach Anspruch 1 und 4 dadurch gekennzeichnet, daß das Abgas in der Rückführungsleitung durch Kesselwasser oder durch Brauchwasser oder durch Frischluft gekühlt wird.

6. Verfahren nach Anspruch 1, 2, 4 und 5 dadurch gekennzeichnet, daß zur Erzeugung einer kühlen Flamme die Verbrennung stufenweise so erfolgt, daß primär die Verbrennung im Flammenraum unvollständig mit hohem CO-und niedrigem NOx-Anteil stattfindet und sekundär durch Sauerstoffüberschuß die unverbrannten Rauchgaskomponenten in einem Spinellkatalysator nachoxidiert werden.

7. Verfahren nach Anspruch 1,2,4 und 6 dadurch gekennzeichnet, daß der Oxidationskatalysator im Temperaturbereich des Rauchgases zwischen 600 und 1000 grdC arbeitet.

8. Verfahren nach Anspruch 1,3 und 4 dadurch gekennzeichnet, daß der Entschwefelungskatalysator im Temperaturbereich des Abgases zwischen 300 und 700 grdC arbeitet.

9. Verfahren nach Anspruch 1, 2 und 3 dadurch gekennzeichnet, daß die Beschichtung der Wabenkörper für die Katalysatoren durch Tränkung in einer lanthanhaltigen Spinellsuspension erfolgt.

10. Verfahren nach Anspruch 1, 2 und 9 dadurch gekennzeichnet, daß die Spinelle so fein ausgemahlen werden, daß sie in der Suspension eines ameisensäurehaltigen Gemisches unter Verwendung von suspensionsbildenden, organischen Stoffen, wie z.B. Tensiden, in der Schwebe gehalten werden.

11. Verfahren nach Anspruch 1, 2 und 9 dadurch gekennzeichnet, daß die Spinelle so fein ausgemahlen werden, daß sie in der Suspension eines ameisensäurehaltigen Gemisches unter gleichzeitiger Aufschlämmung von Wasch-Coat-Komponenten wie TiO2 und Al2O3 in dispergierter Form, in der Schwebe gehalten werden.

12. Verfahren nach Anspruch 2, 9, 10 und 11 dadurch gekennzeichnet, daß der Wash-Coat-Grundstoff für die Katalysatoren sich aus der Auflösung des Kristallverbandes der Stoffe, insbesondere die der Aluminiumoxidkomponente eines speziellen Böhmits, der aus metallischem Aluminium hergestellt wird, zusammen mit TiO2 bildet.

13. Verfahren nach Anspruch 2, 9, 10,11 und 12 dadurch gekennzeichnet, daß organische Säuren die Umkristallisation der lanthanhaltigen Spinelle zu katalytisch aktiven Stoffen, die nadel- und igelförmig aufgebaut sind, ermöglichen.

14. Verfahren nach Anspruch 2, 9, 10,11 und 13 dadurch gekennzeichnet, daß die Spinelle Verbindungen von Lanthanoxid und Kobalt- oder Manganoxid sind.

15. Verfahren nach Anspruch 10, 11, 12, 13 und 14 dadurch gekennzeichnet, daß bei der Wash-Coat-Herstellung mit Überschüssen von Lanthanoxid oder Ceroxid oder Vanadium-bzw. Thoriumoxid gegenüber dem stöchiometrischen Spinell gearbeitet wird.

16. Verfahren nach Anspruch 10, 11, 12, 13,14 und 15 dadurch gekennzeichnet, daß die Herstellung der Spinelle durch Auflösung von Salzen in Lösungsmitteln und anschließendem Erhitzen auf 300 bis 1100 grdC erfolgt.

17. Verfahren nach Anspruch 16 dadurch gekennzeichnet, daß dem Spinell Überschüsse von seltenen Erden mit 2 bis 30% zugegeben werden und daß das Gemisch anschließend auf 300 bis 1100 grdC erhitzt wird.

18. Verfahren nach Anspruch 17 dadurch gekennzeichnet, daß die Spinellrohstoffe in Salpeteroder Alkansäuren eingerührt und der wash-coat Substanz dann TiO2 und Al2O3 zugegeben werden und die keramischen Wabenkörper dann in dieser Suspension getaucht, getrocknet und bei Temperaturen zwischen 300 und 1100 grdC gebrannt werden.

19. Verfahren nach Anspruch 1,2 und 3 dadurch gekennzeichnet, daß zur Herstellung der Katalysatoren gebrannte Wabenkeramiken aus Materialien wie Cordierit oder Mullit, bzw. Tone oder Porzelane mit hoher Temperaturwechselbeständigkeit und Dehnung < 4.5xE-6 je grdK verwendet werden.

20. Vorrichtung zur Durchführung des Verfahrens dadurch gekennzeichnet, daß vor den Berührungsheizflächen und zwischen den Berührungsheizflächen einer Wärmeerzeugungseinheit Wabenkatalysatoren angeordnet sind und daß der Brenner einen Rauchgasrückführungsstutzen besitzt, der mit einer Rohrleitung verbunden ist, die nach den Katalysatoren und der Staubabscheidung im Rauchgaskanal einbindet.

21. Vorrichtung nach Anspruch 20 dadurch gekennzeichnet, daß die Wärmeerzeugungseinheit sowohl ein Dampferzeuger mit Kohle-, Öl- oder Gasfeuerung als auch ein Heizkessel mit Öl- oder Gasfeuerung zur Erzeugung von Warmwasser sein kann.

22. Vorrichtung nach Anspruch 20 und 21 dadurch gekennzeichnet, daß der Oxidationskatalysator, der aus einer oder mehreren Lagen bestehen kann, vor der ersten Berührungsheizfläche des Wärmeerzeugers angeordnet ist.

23. Vorrichtung nach Anspruch 20 und 21 dadurch gekennzeichnet, daß der Oxidationskatalysator so angeordnet werden kann, daß er bei Wärmeerzeugungseinheiten mit kleinen Gasflammen die Brennkammer nach oben zu den Wärmetauschern hin begrenzt.

24. Vorrichtung nach Anspruch 20 dadurch gekennzeichnet, daß Wärmeerzeugungseinheiten, die mit schwefelhaltigen Brennstoffen betrieben werden, ein Katalysator nach der ersten Berührungsheizfläche angeordnet ist, dem eine Vorrichtung zum Abscheiden des elementaren Schwefels nachgeordnet ist.

25. Vorrichtung nach Anspruch 20 bis 24 dadurch gekennzeichnet, daß die Katalysatoren in der Wärmeerzeugungseinhéit durch Metallstrickgewebe umgeben und damit elastisch gehaltert werden.

26. Vorrichtung nach Anspruch 20 dadurch gekennzeichnet, daß die Entnahmeleitung für das rückgeführte Rauchgas bei der Wärmeerzeugungseinheit dort einbindet, wo das Rauchgas schon den Oxidationskatalysator und abhängig vom Brennstoff den Entschwefelungskatalysator und den Staubfilter passiert hat.

27. Vorrichtung nach Anspruch 26 dadurch gekennzeichnet, daß in der Rauchgasrückführungsleitung ein Wärmetauscher angeordnet ist, der Anschlüsse an das Kesselwasser- oder Brauchwassersystem hat.

28. Vorrichtung nach Anspruch 20 und 21 dadurch gekennzeichnet, daß vor dem Oxidationskatalysator bei aschehaltigen Brennstoffen ein Gleichrichter angeordnet ist.

29. Vorrichtung nach Anspruch 20 und 28 dadurch gekennzeichnet, daß die Gleichrichterkeramik aus hochverschleißfesten keramischen Werkstoffen besteht, die oberhalb von 1200grdC gebrannt werden.

Fig. 1

EP 0 384 295 A2

Fig. 2

Fig. 3

EP 0 384 295 A2

Fig. 4

Fig. 5